# EUROPEAN PATENT SPECIFICATION

(11) **EP 1 362 687 B1**
(45) Date of publication and mention of the grant of the patent: **14.02.2007**
(21) Application number: 03014875.3
(22) Date of filing: 25.06.1999
(51) Int. Cl.: B29C 59/00, B60R 21/20

(54) **Process for manufacturing an automotive trim piece preweakened to form an air bag deployment opening**
Verfahren zum Herstellen einer Kraftfahrzeugszierleiste mit Schwächungslinien für eine Luftsack-Entfaltungsöffnung
Procédé pour la fabrication d'une pièce de garniture d'automobile pourvue d'une amorce de rupture pour former une ouverture de déploiement de sac gonflable

(30) Priority: 25.06.1998 US 90622 P
(43) Date of publication of application: 19.11.2003
(62) Divisional of application: 99112282.1
(73) Proprietor: TIP ENGINEERING GROUP, INC., Farmington Hills, Michigan 48334 (US)
(72) Inventor: Nicholas, Antonios, Belle Mead, New Jersey 08502 (US)
(74) Representative: Schaumburg, Thoenes, Thurn, Landskron

(56) References cited:
- US-A- 5 131 678
- US-A- 5 375 876
- US-A- 5 395 668
- US-A- 5 484 561
- US-A- 5 501 890
- US-A- 5 728 342
- US-A- 5 738 367
- US-A- 5 744 776

## Description

This invention concerns the manufacture of trim pieces such as instrument panels and steering wheel covers which overlie air bag installations, and more particularly processes for manufacturing trim pieces which have air bag canisters installed behind the trim pieces which are preweakened to allow an inflating air bag to form a deployment opening by forcing a concealed door section of the trim piece to separate and swing out from the adjacent portion of the trim piece structure.

One or more hinged deployment door panels overlying the air bag have long been incorporated in such auto trim pieces, which are held closed by tabs or other elements and are then forced open by the inflating air bag when the air bag is deployed.

In recent years, so called "invisible seam" installations have been developed, in which the separate visibly delineated doors initially used have been eliminated, and a smooth overlying covering extends over the trim piece location whereat the air bag is mounted.

An opening is formed in the trim piece when the air bag is activated by the inflating air bag forcing itself through a section of the trim piece. This is accomplished by a preweakening of the trim piece at the air bag location to allow the pressure of the inflating air bag to cause a "door" tear in the trim piece to break free and hinge open along one side.

Trim pieces are often constructed in layers including a stiff substrate panel, and overlying skin and foam covering layers, or with a skin bonded to a substrate panel.

The substrate may be molded first, and the skin and foam added subsequently.

The preweakening has involved the formation of preweakening grooves in the trim piece and/or covering layers molded into the piece, or the formation of the grooves as by laser scoring of the trim piece or components thereof.

A separate door panel is often fit into an opening molded into the substrate panel, but this requires additional processing steps.

Cutting through a substrate panel to form the door has also been practiced, but this requires a powerful cutting apparatus to sever the relatively thick substrate, increases cycle time, and in the case of laser cutting, requires handling of the by-products generated by vaporizing of the substrate material.

Document US-A-5,738,367, filed by the same applicant, describes a process for constructing a trim piece. A rigid plastic substrate panel is overlain by a cover layer. The rigid plastic substrate panel includes a pattern of preweakening grooves to define three sides of a door panel which opens when the airbag system is activated.

Document US-A-5,131,678 discloses an invisible airbag cover door. On one substrate an inner layer of foam and an outer skin layer is disposed. These cover layers have grooves that are visible when seen from the outside. These grooves may be extended to reach into the substrate panel in order to achieve fracturing of the substrate panels along these grooves upon inflation of the airbag.

It is the object of the present invention to provide a simplified method of manufacturing an automotive trim piece which is preweakened to form an invisible seam deployment door opening for air bags.

The above object and other which will be understood upon a reading of the following specification and claims is achieved by a process according to claim 1.

Bridging tabs may optionally be formed extending across the gap at one or more locations to stabilize the panel with respect to the rest of the substrate panel.

The one or more covering layers are later added or formed at the same time to overlie the substrate panel. The covering layers may also be cut or scored as by directing a laser beam or other scoring or cutting agent through and along the gap, and tracing along the path of the gap in a door pattern, to preweaken the covering layer in a pattern corresponding to the free, unhinged sides of the door sections.

### Description of the Drawing Figures

Figure 1 is a perspective view of a trim piece having a double deployment door formed as a part of the process of the present invention, the trim piece being preweakened by laser beam apparatus depicted diagrammatically.
Figure 2 is a perspective view of a single door substrate panel formed as a part of the process of the present invention.
Figure 3 is a perspective view of a single door substrate panel formed as a part of the process according to the present invention, having a hinge reinforcement added.
Figure 4 is a perspective view of a trim piece formed by the process according to the present invention
Figure 5 is a view of the section 5-5 taken in Figure 4.
Figure 6 is a view of the section 6-6 taken in Figure 4.
Figure 7 is a view of the section taken through a trim piece having an alternate form of the tab features.
Figure 8 is a sectional view showing an alternate form of preweakening of the covering layers.

### Detailed Description

In the following detailed description, certain specific terminology will be employed for the sake of clarity and a particular embodiment described in accordance with the requirements of 35 USC 112, but it is to be understood that the same is not intended to be limiting and should not be so construed inasmuch as the invention is capable of taking many forms arid variations within the scope of the appended claims.

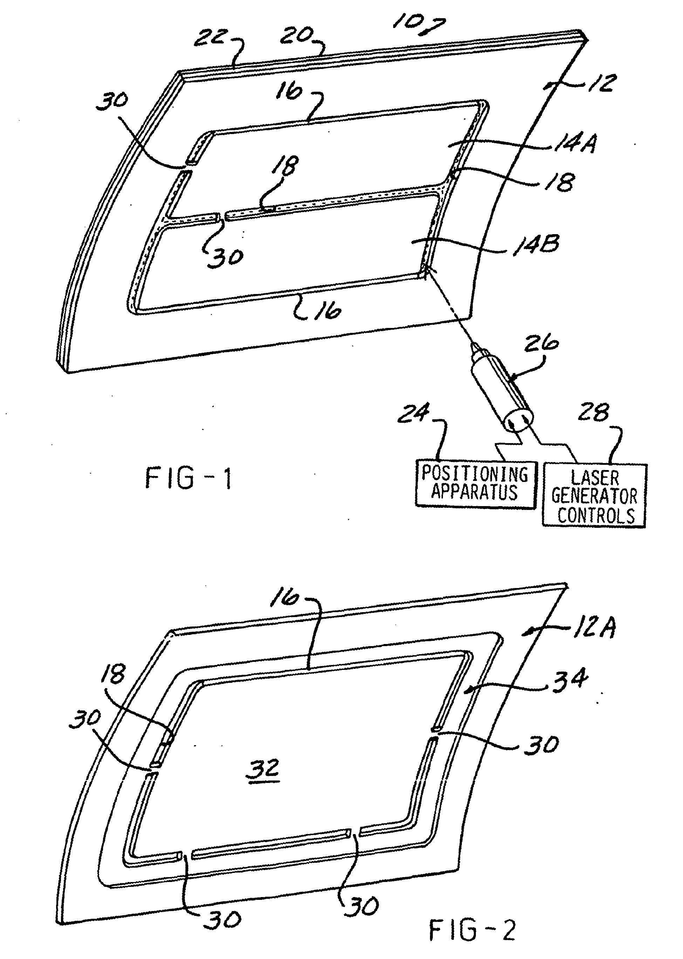

Referring to the Drawings, Figure 1 shows the inside of a trim piece comprised of a substrate panel 12 which provides the structural integrity of the trim piece and hence is thick enough to be relatively rigid.

The substrate panel 12 can be constructed using conventional materials such as suitable polymers or wood fiber, and using conventional processes such as injection molding, casting, and thermoforming.

In the embodiment shown in Figure 1, a deployment opening is defined by a pair of generally rectangular deployment door panels 14A, 14B integrally connected along one of the sides 16, each defining a parallel hinge axis for swing out movement of the door panels 14A, 14B.

The perimeter of the other three sides of the door panels 14A, 14B are defined by a gap pattern 18 which may be preformed at the same time as the substrate panel 12 itself

The substrate panel 12 has one or more covering layers 20, 22 which overlie the exterior of the substrate panel 12, i.e., the side of the trim piece exposed to view within the passenger compartment. The covering layer 20 may be a flexible skin of a plastic such as TPO and may be supported by a foam layer 22. The covering layers 20, 22 extend smoothly over the door panels 14A, 14B and the gap 18 to render the door panels 14A, 14B not visible to a passenger or driver within a vehicle passenger compartment. The substrate panel is generally attached to a rigid supporting structure in the vehicle.

The inside of the cover layers 20, 22 are exposed within the perimeter gap 18 so as to allow a preweakening cut 19 to be applied after the trim piece has been completed to eliminate the need to align a preweakened cover layers 20, 22 with the door panels 14A, 14B.

Such preweakening is preferably carried out with a laser beam, as described in detail in U.S. patents 5,744,776 and 5,883,356, issued to the same assignee as the assignee of the present application. Other processes may also be used, such as a mechanical knife (as described in U.S. patent 5,217,244, also assigned to the assignee of the present application).

Ultrasonic, hot knife, and water jet machining are other processes which may be used.

A laser beam generator 26 is shown in Figure 1, with positioning apparatus 24 provided to cause the laser beam to trace along the gap 18 so as to cause continuous or intermittent scoring of the covering layers 20, 22 to accomplish a preweakening as described in the above referenced patents. A gauging sensor (not shown) may also be used to carry out a particular preweakening program, and laser generator controller 28 may vary the laser power, velocity, etc. to in tum vary the depth or extent of scoring or cutting to achieve a desired degree of preweakening along the gap pattern 18.

As also shown in Figure 1, bridging tabs 30 may extend across the gap 18 at selected locations to provide strength to the trim piece by connecting the door panels 14A, 14B to each other and to the adjacent regions of the substrate panel 12.

Figure 2 shows the application to a substrate panel 12A having only a single deployment door panel 32. Also shown is a stiffener frame 34 affixed to the perimeter of the gap 18 and door panel 32 to stiffen the substrate panel 12A for purposes as described in U.S. patent 5,393,088.

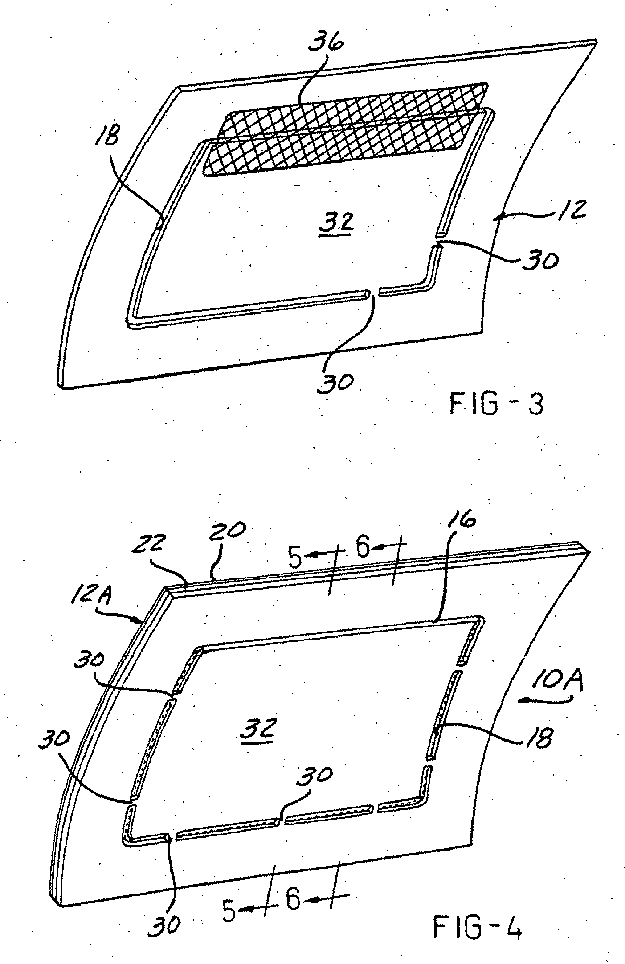

Figure 3 shows the addition of a hinge reinforcement 36, such as a sheet of scrim, which can be attached to insure that the door panel 32 does not break free. An integrally molded reinforcement may also be employed. Such a reinforcement could also be extended to cover the complete door panel.

Figures 4-8 show further details of the trim piece 10A made by the process of the present invention.

The covering layers may comprise a polymeric, leather or fabric skin 20 and foam plastic layer 22 overlying the substrate 12.

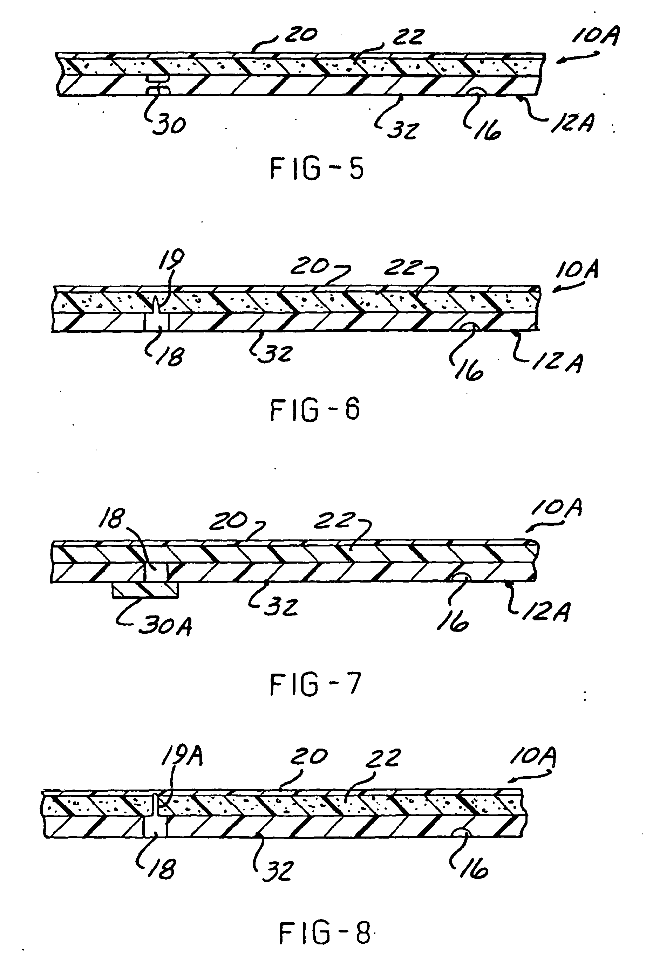

The tabs 30 can take various design configurations and extend across the gap 18. The tabs can be integrally molded with the substrate or can be attached to the substrate separately as shown in Figure 7. The hinge 16 may comprise a reduced cross section area recessed in from either surface of the substrate panel 12A.

The weakening cut or cuts 19 are aligned with the gap 18 and may only penetrate the foam layer 22 (Figure 6) or a cut 19A may extend into the skin 20 (Figure 8).

Figure 7 shows a tab 30A which is not integral but rather underlies the door panel 32 to provide support against inward pushing forces applied to the outside of the piece 10A.

Forming of the substrate panel can be done in several ways including injection molding, casting or thermoforming. Preferred materials for the substrate panel comprise thermoset and thermoplastic polymers but other materials can be used, including wood fiber and metal. An air bag canister can also be included as an integral part of the substrate panel. The door panel or panels can be made integrally with the substrate panel (i.e., door and substrate molded simultaneously into one piece) or made separately (i.e., substrate panel molded with door opening and door panel attached to substrate panel subsequently). The door panel or panels and particularly the hinge can be further reinforced via rigid or flexible materials (hard plastic scrim fabric, metal, etc.). This reinforcement can take place either during any forming of the substrate panel, i.e., by co-molding scrim fabric with integral deployment door hinge, or after forming of the substrate door panel. The gap separation between the door panel sides and the substrate panel can be complete with no material joining the two panels or partial. The optional stiffener frame either integral with the substrate panel or separate may also be located extending outside and around the door opening perimeter. Alternatively, the substrate panel may be attached to the air bag canister through fasteners or bolts located around the door perimeter.

The covering layers can be flexible or rigid and include foams, leather, vinyl/TPO/TPF/TPU skins, fabrics and laminated wood. In a foam/skin/construction, injection of plastic foam between the skin and substrate layers generally requires that the door perimeter gap be temporarily sealed to allow proper foam expansion. Pre-weakening of one or more of the covering layers can be carried out by any of several contacting or non-contacting scoring-cutting techniques, i.e., mechanical knife, water jet, ultrasonic cutting, etc. A preferred method is cutting or scoring with a laser beam that can pre-weaken rapidly, accurately and in any desirable configuration and pattern, i.e., continuous or semi-continuous grooves, perforations, slots, etc. The preweakening scoring or cutting can be carried out from either side of the substrate panel but preferably from the inside.

If a laser beam is utilized, this enables the trim piece manufacturer to first assemble the trim piece and then rapidly and accurately pre-weaken the covering layers through or along the separation between the substrate panel and the door panel or panels without having to cut through the substrate panel, which can be of substantial thickness.

During the preweakening step, gauging of the thickness of the covering layer or layers thickness can be included to better control the laser so that it removes the desired amount of covering material. Gauging can be done from either side of the covering layer or layers using any of various types of sensors, including ultrasonic, infrared, and capacitance type sensors.

## Claims

1. A process for constructing a trim piece (10, 10A) having a section preweakened in a pattern to allow formation of one or more deployment doors (14A, 14B; 32) for an air bag installation to be overlain by said trim piece preweakened section, the process comprising the steps of:
forming a substrate panel (12, 12A) having an opening therein; and subsequently recessing one or more door panels (14A, 14B; 32) into said opening, with a predetermined gap (18) between adjacent portions of said one or more door panels (14A, 14B; 32) as well as between the one or more door panels and the perimeter of said opening, said one or more door panels (14A, 14B; 32) joined along one side to said substrate panel (12, 12A) to form a hinge;
overlaying said substrate panel (12,12A) with one or more cover layers (20, 22) extending across said one or more door panels (14A,14B) and said gap (18) therebetween;
preweakening said overlaying covering layers (20, 22) by scoring portions of the inside of at least one of said cover layers (20, 22) at least partially along said gap (18).

2. The process according to claim 1 further including the step of reinforcing the perimeter of said opening with a stiffener frame (34).

3. The process according to anyone of the foregoing claims further including the step of reinforcing said hinge of said one or more door panels (14A, 14B; 32).

4. The process according to anyone of the foregoing claims further including the step of reinforcing said one or more door panels (14A, 14B; 32).

5. The process according to anyone of the foregoing claims further including the step of providing one or more bridging tabs (30) extending across said gap (18) to join said one or more door panels (14A, 14B; 32) to adjacent portions of said substrate panel (12, 12A).

6. The process according to anyone of the foregoing claims, wherein said preweakening of the covering layers (20, 22) is carried out continuously or intermittently along said gap (18).

7. The process according to anyone of the foregoing claims, wherein the covering layer has a flexible skin (20) made of plastic and is supported by a foam layer (22) and wherein both the foam layer (22) and the flexible skin are cut through the gap (18), wherein the skin (20) is cut partially.

## Patentansprüche

1. Verfahren zum Konstruieren eines Verkleidungsteils (10, 10A), das einen Abschnitt hat, der in einem Muster so vorgeschwächt ist, dass er die Bildung einer oder mehrerer Entfaltungstüren (14A, 14B; 32) ermöglicht, sodass eine Airbag-Einrichtung mit dem vorgeschwächten Abschnitt des Verkleidungsteils bedeckt werden kann, wobei das Verfahren folgende Schritte umfasst:
Bilden einer Substratplatte (12, 12A), in der eine Öffnung ausgebildet ist; und anschließendes Einsetzen einer oder mehrerer Türplatten (14A, 14B; 32) in die Öffnung mit einem vorbestimmten Zwischenraum (18) zwischen angrenzenden Abschnitten der einen oder mehreren Türplatten (14A, 14B; 32) sowie zwischen der einen oder den mehreren Türplatten und dem Rand der Öffnung, wobei die eine oder mehreren Türplatten (14A, 14B; 32) entlang einer Seite mit der Substratplatte (12, 12A) verbunden sind und ein Scharnier bilden;
Bedecken der Substratplatte (12, 12A) mit einer oder mehreren Deckschichten (20, 22), die sich über die eine oder mehreren Türplatten (14A, 14B; 32) und den dazwischenliegenden Zwischenraum (18) erstrecken; Vorschwächen der bedeckenden Deckschichten (20, 22), indem Abschnitte des Inneren von zumindest einer Deckschicht (20, 22) zumindest teilweise entlang des Zwischenraums (18) geritzt werden.

2. Verfahren nach Anspruch 1, ferner umfassend das Verstärken des Randes der Öffnung mit einem Versteifungsrahmen (34).

3. Verfahren nach einem der vorhergehenden Ansprüche, ferner umfassend das Verstärken des Scharniers der einen oder mehreren Türplatten (14A, 14B; 32).

4. Verfahren nach einem der vorhergehenden Ansprüche, ferner umfassend das Verstärken der einen oder mehreren Türplatten (14A, 14B; 32).

5. Verfahren nach einem der vorhergehenden Ansprüche, ferner umfassend das Bereitstellen einer oder mehrerer Überbrückungslaschen (30), die sich über den Zwischenraum (18) erstrecken, um die eine oder mehreren Türplatten (14A, 14B; 32) mit angrenzenden Abschnitten der Substratplatte (12, 12A) zu verbinden.

6. Verfahren nach einem der vorhergehenden Ansprüche, wobei die Vorschwächung der Deckschichten (20, 22) entlang dem Zwischenraum (18) kontinuierlich oder intermittierend erfolgt.

7. Verfahren nach einem der vorhergehenden Ansprüche, wobei die Deckschicht eine flexible, aus Kunststoff hergestellte Haut (20) hat und durch eine Schaumschicht (22) gehalten wird, und wobei sowohl die Schaumschicht (22) als auch die flexible Haut durch den Zwischenraum (18) hindurch geschnitten werden, wobei die Haut (20) teilweise geschnitten wird.

## Revendications

1. Processus permettant de construire une pièce de garniture intérieure (10, 10A) ayant une section préaffaiblie selon un contour permettant la formation d'au moins un volet de déploiement (14A, 14B ; 32) pour une installation d'airbag devant être recouverte par ladite section préaffaiblie de pièce de garniture intérieure, ledit processus comprenant les étapes consistant à :
former un panneau de substrat (12, 12A) ayant une ouverture dans celui-ci ; et ensuite insérer au moins un panneau de volet (14A, 14B ; 32) dans ladite ouverture, avec un intervalle prédéterminé (18) entre les parties adjacentes dudit au moins un panneau de volet (14A, 14B ; 32), ainsi qu'entre ledit au moins un panneau de volet et le périmètre de ladite ouverture, ledit au moins un panneau de volet (14A, 14B ; 32) étant relié le long d'un côté dudit panneau de substrat (12, 12A) pour former une charnière ;
recouvrir ledit panneau de substrat (12, 12A) avec au moins une couche de revêtement (20, 22) s'étendant sur la totalité dudit au moins un panneau de volet (14A, 14B ; 32) et dudit intervalle (18) défini entre eux ;
préaffaiblir lesdites couches de revêtement superposées (20, 22) grâce à un rainage des parties de l'intérieur d'au moins l'une desdites couches de revêtement (20, 22) au moins partiellement le long dudit intervalle (18).

2. Processus selon la revendication 1, incluant en outre l'étape de renforcement du périmètre de ladite ouverture avec un cadre de renfort (34).

3. Processus selon l'une quelconque des revendications précédentes, incluant en outre l'étape de renforcement de ladite charnière dudit au moins un panneau de volet (14A, 14B ; 32).

4. Processus selon l'une quelconque des revendications précédentes, incluant en outre l'étape de renforcement dudit au moins un panneau de volet (14A, 14B ; 32).

5. Processus selon l'une quelconque des revendications précédentes, incluant en outre l'étape de fourniture d'au moins une patte de pontage (30) s'étendant au travers dudit intervalle (18) pour relier ledit au moins un panneau de volet (14A, 14B ; 32) aux parties adjacentes dudit panneau de substrat (12, 12A).

6. Processus selon l'une quelconque des revendications précédentes, dans lequel ledit préaffaiblissement des couches de revêtement (20, 22) est réalisé en continu ou par intermittence le long dudit intervalle (18).

7. Processus selon l'une quelconque des revendications précédentes, dans lequel la couche de revêtement a une peau flexible (20) constituée de plastique, et est supportée par une couche en mousse (22), et dans lequel la couche en mousse (22) ainsi que la peau flexible sont découpées à travers l'intervalle (18), et dans lequel la peau (20) est découpée partiellement.
